# FASCICULE DE BREVET EUROPEEN

(11) **EP 4 244 534 B1**
(45) Date de publication et mention de la délivrance du brevet: **08.07.2026**
(21) Numéro de dépôt: 21798753.6
(22) Date de dépôt: 04.10.2021
(51) Int. Cl.: F23R 3/28, F02K 9/52, F23D 11/40, F23R 7/00

(54) **INJECTEUR DE FLUIDES**
FLÜSSIGKEITSINJEKTOR
FLUID INJECTOR

(30) Priorité: 16.10.2020 FR 2010634
(43) Date de publication de la demande: 20.09.2023
(73) Titulaire: Office National d'Etudes et de Recherches Aérospatiales, 91120 Palaiseau (FR)
(72) Inventeur: DAVIDENKO, Dmitry, 91120 PALAISEAU (FR); GAILLARD, Thomas, 91120 PALAISEAU (FR)
(74) Mandataire: Hautier IP
(86) Numéro de dépôt international: PCT/FR2021/051711
(87) Numéro de publication internationale: WO 2022/079368

(56) Documents cités:
- EP-A1- 3 205 939
- EP-A2- 2 657 483
- JP-A- 2003 269 254
- US-A- 6 016 658
- US-A1- 2011 265 482
- US-A1- 2014 060 059

## Description

### Domaine technique

La présente description concerne un injecteur de fluides dans une chambre, notamment dans une chambre de combustion, ainsi qu'un moteur qui est muni d'un tel injecteur, notamment un moteur à détonation continue.

### Technique antérieure

Dans un moteur à détonation continue, ou «Rotating Detonation Engine» en anglais, la continuité et la régularité du fonctionnement du moteur dépendent des caractéristiques d'injection des fluides dans la chambre de combustion. Ces fluides comprennent un oxydant et un carburant, et éventuellement d'autres composants du mélange de combustion. Chacun peut être gazeux, liquide, ou constitué de gouttelettes en suspension dans un gaz vecteur. Ces fluides sont injectés à travers une paroi de la chambre, par une multiplicité d'ouvertures qui sont réparties dans cette paroi. Le but est d'obtenir un mélange des fluides injectés qui soit homogène et uniformément réparti à proximité de la paroi d'injection, appelée injecteur. Lorsque la formation d'un prémélange des fluides avant l'injection dans la chambre ne présente pas de risque d'explosion ni de dégradation du système d'alimentation de la chambre avec les fluides, un tel prémélange assure que les fluides soient intimement mélangés lorsqu'ils parviennent dans la chambre. Lorsqu'un risque d'explosion ou de dégradation existe, certains au moins des composants du mélange sont introduits par des ouvertures séparées dans la chambre. Le mélange des composants se produit alors dans la chambre de combustion à une distance non-nulle de la paroi d'injection. Mais la réaction de combustion survient alors de façon peu contrôlée quant à son uniformité, à son efficacité de démarrage, et à la distance à l'intérieur de la chambre à laquelle elle se produit réellement.

Le document WO 2014/189603 divulgue un injecteur dans lequel des préchambres ouvertes sur une chambre de combustion sont alimentées chacune en oxydant par un conduit axial qui est opposé à l'ouverture de la préchambre sur la chambre, et alimentées en réducteur par un canal qui débouche latéralement dans la préchambre.

### Problème technique

A partir de cette situation, un but de la présente invention est de proposer un nouvel injecteur qui permet de créer une couche de mélange homogène rapidement et près de la paroi d'injection, en réduisant ou en supprimant des risques d'explosion ou de dégradation de l'injecteur.

### Résumé de l'invention

Pour atteindre ce but ou un autre, un premier aspect de l'invention propose un injecteur pour injecter simultanément au moins deux fluides dans une chambre en créant des conditions pour un mélange de ces fluides dans la chambre. L'injecteur est adapté pour former une paroi de la chambre ou pour être intégré à cette paroi de la chambre, et comprend au moins un élément d'injection qui est adapté pour recevoir les fluides séparément par un conduit axial et par au moins un canal latéral, ces conduit axial et canal latéral étant dédiés à l'élément d'injection. L'élément d'injection est adapté en outre pour transmettre les fluides ainsi conflués vers ou dans la chambre.

Dans l'injecteur de l'invention, chaque élément d'injection comprend un volume évidé, appelé préchambre, qui possède un axe longitudinal, un côté amont et un côté aval qui sont opposés selon l'axe longitudinal, et définis par rapport à un sens d'écoulement des fluides dans la préchambre parallèlement à l'axe longitudinal. Le conduit axial de l'élément d'injection débouche dans la préchambre sur le côté amont, et chaque canal latéral débouche dans la préchambre à travers une paroi latérale de cette préchambre qui est située entre les côtés amont et aval, de façon à faire confluer dans la préchambre les fluides qui sont amenés séparément par le conduit axial et chaque canal latéral. En outre, la préchambre est en communication fluidique avec la chambre sur son côté aval.

Selon l'invention, pour chaque élément d'injection, une ouverture de chaque canal latéral dans la paroi latérale de la préchambre est allongée parallèlement à l'axe longitudinal, avec une largeur maximale de l'ouverture, mesurée perpendiculairement à l'axe longitudinal, qui est inférieure à une longueur de l'ouverture, mesurée parallèlement à l'axe longitudinal.

Ainsi une longueur de rencontre du fluide qui est introduit dans la préchambre par chaque canal latéral avec le fluide qui est introduit par le conduit axial est augmentée. Le fluide qui provient de chaque canal latéral et le fluide qui provient du conduit axial sont ainsi en contact selon une surface de contact qui est plus grande, sans être mélangés l'un à l'autre. La confluence des fluides qui est produite par un injecteur selon l'invention réalise donc un compromis entre une grande mise en contact des fluides et des conditions de sécurité par rapport aux risques d'explosion ou de dégradation de l'injecteur. Grâce à la grande mise en contact des fluides qui est réalisée dans la préchambre, les fluides se mélangent ensuite rapidement après être parvenus dans la chambre, c'est-à-dire à courte distance de la paroi de la chambre qui est formée par l'injecteur, ou dans laquelle l'injecteur est intégré.

Avantageusement, pour chaque élément d'injection et pour chaque canal latéral de cet élément d'injection, un quotient de la longueur de l'ouverture sur sa largeur maximale peut être supérieur à 1,5, de préférence supérieur à 2 et inférieur à 8.

Avantageusement encore, une section de la préchambre en aval du canal latéral ou des canaux latéraux qui débouche(nt) dans cette préchambre, lorsqu'elle est mesurée perpendiculairement à l'axe longitudinal de cette préchambre, peut être sensiblement égale à la somme des sections transversales respectives du conduit axial et de chaque canal latéral. De cette façon, l'élément d'injection réalise dans une mesure qui est encore améliorée, une mise en contact des fluides sans provoquer de mélange entre eux avant leur arrivée dans la chambre, ou en réduisant un début de mélange qui pourrait se produire dans la préchambre.

Possiblement, chaque élément d'injection peut comprendre au moins deux canaux latéraux qui débouchent dans la préchambre de cet élément d'injection, avec des ouvertures respectives dans la paroi latérale de la préchambre qui sont séparées, et réparties angulairement autour de l'axe longitudinal selon une périodicité azimutale. Dans un tel cas de plusieurs canaux latéraux par élément d'injection, un axe longitudinal de chaque canal latéral peut être décalé transversalement d'un écart non-nul par rapport à l'axe longitudinal de la préchambre. La périodicité azimutale de répartition des canaux latéraux ainsi que les décalages de leurs axes longitudinaux par rapport à celui de la préchambre favorisent encore plus la mise en contact des fluides sans que ceux-ci ne se mélangent dans la préchambre.

Plus particulièrement, lorsque chaque élément d'injection comprend deux canaux latéraux qui débouchent dans la préchambre de cet élément d'injection, ils débouchent préférablement à des endroits qui sont opposés par rapport à l'axe longitudinal de la préchambre. En outre, lorsque cette préchambre possède une forme cylindrique à section circulaire de rayon R, l'écart entre l'axe longitudinal de chaque canal latéral et l'axe longitudinal de la préchambre peut être compris entre 0,9 et 1,1 fois la valeur du rayon R multipliée par 0,265. Ainsi, les axes longitudinaux respectifs des deux canaux latéraux forment une partition de la section de la préchambre en trois parties de section qui ont des aires sensiblement égales. Grâce à une telle partition, les fluides injectés par les deux canaux latéraux et par le conduit axial ne se mélangent pas, ou très peu, dans la préchambre.

De façon plus générale, lorsque chaque élément d'injection comprend n canaux latéraux qui débouchent dans la préchambre de cet élément d'injection, n étant un nombre entier supérieur ou égal à 3 et inférieur ou égal à 6, et lorsque la préchambre possède une forme cylindrique à section circulaire de rayon R, l'écart entre l'axe longitudinal de chaque canal latéral et l'axe longitudinal de la préchambre peut être compris entre 0,9 et 1,1 fois la valeur du rayon R multipliée par [π/(n·(n+1)·tan(π/n))]^{1/2}. Comme pour le cas précédent qui correspond à n égal à 2, un tel décalage des axes longitudinaux respectifs des n canaux latéraux assure que ces axes longitudinaux de canaux latéraux forment une partition de la section de la préchambre en n+1 parties de section qui ont des aires sensiblement égales. Ainsi, les fluides qui sont injectés par les n canaux latéraux et par le conduit axial ne se mélangent pas, ou très peu, dans la préchambre.

Dans des modes de réalisation préférés de l'invention où la préchambre possède une forme cylindrique à section circulaire, le rayon R de la préchambre peut être compris entre 0,5 mm (millimètre) et 5 mm, de préférence entre 0,6 mm et 2 mm.

De façon générale pour l'invention, l'injecteur peut comprendre plusieurs éléments d'injection qui sont disposés pour injecter simultanément dans la chambre à des endroits respectifs séparés qui sont répartis dans la paroi de cette chambre, les fluides amenés à confluer à l'intérieur des préchambres de tous les éléments d'injection. Dans ce cas, les endroits séparés dans la paroi de la chambre auxquels sont injectés les fluides à mélanger, en provenance des préchambres, peuvent constituer un agencement régulier, de préférence un agencement qui est périodique angulairement autour d'un point central de la paroi de chambre si celle-ci possède une forme circulaire ou annulaire, ou plus généralement si elle possède une forme à symétrie de révolution. Alternativement, la répartition des éléments d'injection dans la paroi de la chambre peut être aléatoire, et/ou non-uniforme et adaptée à une conception ou un mode de fonctionnement de la chambre.

Selon l'invention, pour chaque élément d'injection, chaque canal latéral peut être connecté à un conduit latéral qui est destiné à amener l'un des fluides à mélanger à une entrée de ce canal latéral qui est opposée à la préchambre de l'élément d'injection considéré. Alors, pour au moins un couple d'éléments d'injection qui sont voisins dans la paroi de la chambre, le même conduit latéral peut être commun aux deux éléments d'injection, en étant connecté en parallèle aux entrées des canaux latéraux respectifs de ces deux éléments d'injection.

Encore de façon générale pour l'invention, l'injecteur peut être agencé de sorte que celui des fluides qui est injecté dans la chambre avec un débit qui est le plus élevé par rapport à chaque autre fluide injecté dans la chambre, dans des conditions de fonctionnement de l'injecteur, soit injecté dans chaque préchambre par le canal latéral ou par au moins un des canaux latéraux. Une meilleure interpénétration des fluides peut ainsi être obtenue à l'intérieur de la préchambre. Autrement dit, les fluides conflués ont une surface de contact plus grande lorsqu'ils sortent de la préchambre à travers l'ouverture.

Un second aspect de l'invention propose un moteur comprenant un injecteur qui est conforme au premier aspect, cet injecteur constituant une paroi d'une chambre de combustion du moteur, ou étant intégré dans une paroi d'une chambre de combustion du moteur.

De préférence, le moteur peut être agencé de sorte que celui des fluides qui contient un réducteur soit injecté par le conduit axial dans chaque préchambre, et un autre des fluides, qui contient un oxydant, soit injecté dans chaque préchambre par le canal latéral ou par au moins un des canaux latéraux. Pour certaines applications, le réducteur peut être de l'hydrogène, et l'oxydant peut être de l'oxygène.

Un moteur qui est conforme à l'invention peut être un moteur de fusée, notamment un moteur de fusée à ergols gazeux ou liquides. Dans ce cas, il peut s'agir d'un moteur à détonation continue.

D'autres moteurs du type à détonation continue peuvent aussi comprendre avantageusement un injecteur qui est conforme à l'invention, en constituant par exemple une turbomachine, notamment un turboréacteur, une turbine d'hélicoptère ou une turbine à gaz terrestre.

Alternativement, un moteur qui est conforme à l'invention peut être un micromoteur ou une microturbine.

Plus largement, l'invention peut être appliquée à tout réacteur qui nécessite des alimentations en fluides qui sont séparées pour faire réagir ensuite ces fluides à partir de conditions de confluence.

### Brève description des figures

Les caractéristiques et avantages de la présente invention apparaîtront plus clairement dans la description détaillée ci-après d'exemples de réalisation non-limitatifs, en référence aux figures annexées parmi lesquelles :
[Fig. 1a] est une vue en perspective d'un mode de réalisation de l'invention à un seul canal latéral par élément d'injection ;
[Fig. 1b] est une vue en coupe transversale d'un élément d'injection correspondant au mode de réalisation de [Fig. 1a] ;
[Fig. 2a] correspond à [Fig. 1a] pour un mode de réalisation de l'invention à deux canaux latéraux par élément d'injection ;
[Fig. 2b] correspond à [Fig. 1b] pour le mode de réalisation de [Fig. 2a] ;
[Fig. 3] correspond à [Fig. 1b] pour un mode de réalisation de l'invention à trois canaux latéraux par élément d'injection ;
[Fig. 4] correspond à [Fig. 1b] pour un mode de réalisation de l'invention à quatre canaux latéraux par élément d'injection ;
[Fig. 5] est un schéma d'un moteur à détonation continue qui est conforme à l'invention ; et
[Fig. 6] illustre un mode préféré de réalisation d'un injecteur conforme à l'invention.

### Description détaillée de l'invention

Pour raison de clarté, les dimensions des éléments qui sont représentés dans ces figures ne correspondent ni à des dimensions réelles, ni à des rapports de dimensions réels. En outre, des références identiques qui sont indiquées dans des figures différentes désignent des éléments identiques ou qui ont des fonctions identiques.

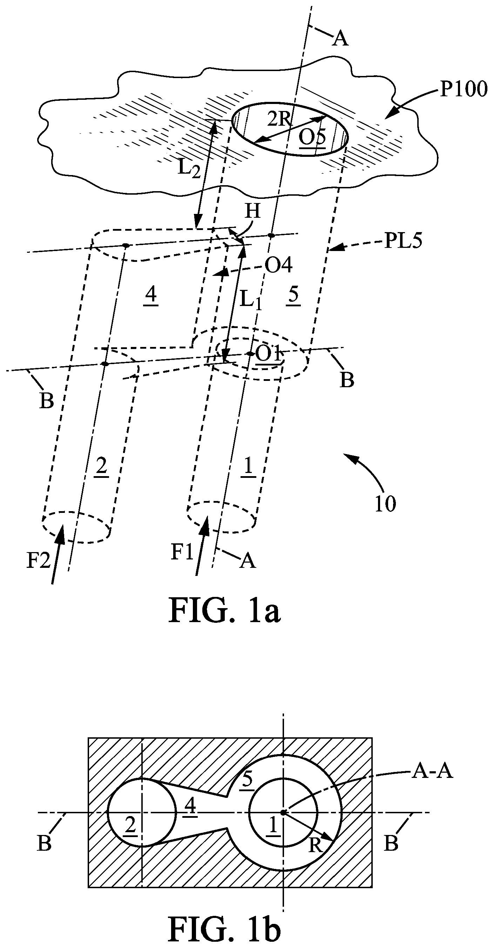

Dans le premier mode de réalisation de [Fig. 1a], la référence 5 désigne la préchambre d'un élément d'injection 10. Cette préchambre 5 débouche dans la face P100 de l'injecteur par l'ouverture O5. A-A désigne l'axe longitudinal de la préchambre 5, qui peut avoir une forme de cylindre droit d'axe A-A et de section circulaire. R désigne le rayon de cette section. L'axe longitudinal A-A de la préchambre 5 peut être perpendiculaire à la face P100 de l'injecteur. Du côté opposé à l'ouverture O5, un conduit axial 1 débouche dans la préchambre 5 par l'ouverture O1. En outre, un canal latéral 4 débouche par l'ouverture O4 dans la préchambre 5, à travers la paroi latérale PL5 de cette dernière. B-B désigne l'axe longitudinal du canal latéral 4, qui est perpendiculaire à l'axe longitudinal A-A de la préchambre 5 dans le mode de réalisation représenté. Le canal latéral 4 est connecté à un conduit latéral 2, à une extrémité de ce canal latéral qui est opposée à l'ouverture O4. Dans le mode de réalisation représenté, le conduit latéral 2 est orienté parallèlement à l'axe longitudinal A-A de la préchambre 5, sans que cette orientation soit indispensable. Pour un tel mode de réalisation de l'invention à un seul canal latéral 4, l'axe longitudinal B-B de ce canal latéral coupe l'axe longitudinal A-A de la préchambre 5. Autrement dit, il n'y a pas de décalage entre les axes A-A et B-B, comme cela apparaît dans [Fig. 1b]. A noter qu'il n'est pas nécessaire que l'axe longitudinal B-B du canal latéral 4 soit perpendiculaire à l'axe longitudinal A-A de la préchambre 5, ni que l'ouverture O4 ait des bords qui soient droits et parallèles à l'axe A-A.

Les autres références qui apparaissent dans [Fig. 1a] sont les suivantes :
H : largeur de l'ouverture O4, mesurée dans un plan perpendiculaire à l'axe A-A ;
L₁ : longueur de l'ouverture O4, mesurée parallèlement à l'axe A-A ;
L₂ : distance entre l'ouverture O4 et la face P100 de l'injecteur ;
F1 : sens d'écoulement d'un premier fluide dans le conduit axial 1 ; et
F2 : sens d'écoulement d'un second fluide dans le conduit latéral 2.

La préchambre 5 avec les ouvertures O1, O4 et O5 constitue l'élément d'injection 10 qui permet de faire confluer les fluides qui sont amenés séparément par le conduit axial 1 et le canal latéral 4.

De préférence, l'aire de l'ouverture O5 de la préchambre 5 peut être sensiblement égale à la somme de l'aire de l'ouverture O1 et de celle de l'ouverture O4. Lorsque l'ouverture O4 possède deux bords opposés qui sont droits et parallèles à l'axe A-A, comme représenté dans [Fig. 1a], son aire peut être estimée comme étant sensiblement égale au produit de H par L₁.

Selon l'invention, la longueur L₁ de l'ouverture O4 est plus grande que sa largeur H. De préférence, le quotient L₁/H est supérieur 1,5, notamment compris entre 2 et 5.

L'ajustement de la distance L₂ en dessous d'une limite permet de réduire un mélange entre les fluides amenés séparément par les conduits 1 et 2, qui pourrait se produire dans la préchambre 5. Ainsi, l'élément d'injection 10 produit une confluence des deux fluides en évitant qu'un mélange de ceux-ci ne se produise dans une mesure significative avant que ces fluides sortent de la préchambre 5 par l'ouverture O5.

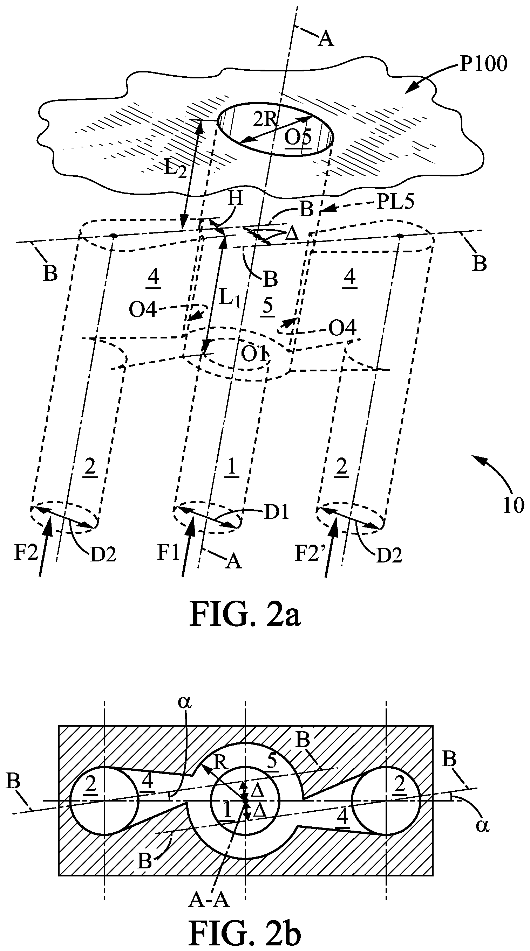

Le deuxième mode de réalisation de [Fig. 2a] et [Fig. 2b] peut se déduire du premier de [Fig. 1a] et [Fig. 1b] en ajoutant un second canal latéral 4 et un second conduit latéral 2, symétriquement à ceux du premier mode de réalisation par rapport à l'axe longitudinal A-A. Ainsi, deux ensembles d'alimentation latéraux qui peuvent être identiques débouchent à travers la paroi latérale PL5 de la préchambre 5, à des endroits de celle-ci qui sont opposés par rapport à l'axe longitudinal A-A. F2' désigne le sens d'écoulement d'un troisième fluide dans le conduit latéral 2 qui est ajouté. Les adaptations supplémentaires suivantes constituent des perfectionnements :
- l'aire de l'ouverture O5 de la préchambre 5 dans la face P100 peut être sensiblement égale à la somme de l'aire de l'ouverture O1 et de celles des deux ouvertures O4 des deux canaux latéraux 4 ; et
- les axes longitudinaux respectifs B-B des deux canaux latéraux 4 peuvent être déviés selon des rotations respectives des deux ensembles d'alimentation latéraux autour d'axes parallèles à l'axe longitudinal A-A, avec des angles α qui sont identiques. Ainsi, les deux axes B-B ont un même écart de décalage non-nul, noté Δ, par rapport à l'axe longitudinal A-A. Cet écart de décalage Δ est mesuré dans un plan perpendiculaire à l'axe A-A, conformément à [Fig. 2b]. Préférablement, les déviations angulaires α des deux canaux latéraux 4 sont telles que les axes longitudinaux respectifs B-B de ces deux canaux latéraux 4 divisent la section de la préchambre 5 en trois parties égales. Pour cela, et lorsque la préchambre 5 possède une forme de cylindre droit à base circulaire de rayon R, le quotient Δ/R doit être égal à la solution de l'équation Arccos(δ) - (δ²-δ⁴)^{1/2}=π/3, où δ est l'inconnue et Arccos() désigne la fonction réciproque du cosinus. Ainsi, la solution exacte est Δ/R=0,265, et des modes de réalisation satisfaisants sont encore obtenus lorsque Δ/R est égal à 0,265 à +/-10% près.

Pour le mode de réalisation de [Fig. 2a] et [Fig. 2b], les valeurs numériques suivantes peuvent être adoptées : R = 0,61 mm, Δ= 0,16 mm, donnant Δ/R = 0,262, H = 0,36 mm, L₁ = 2,4 mm, L₂ = 0,7 mm, D₁ = 0,71 mm, et D₂ = 0,87 mm, où D₁ et D₂ sont les diamètres respectifs du conduit axial 1 et de chaque conduit latéral 2. Le quotient L₁/H est alors égal à 6,7.

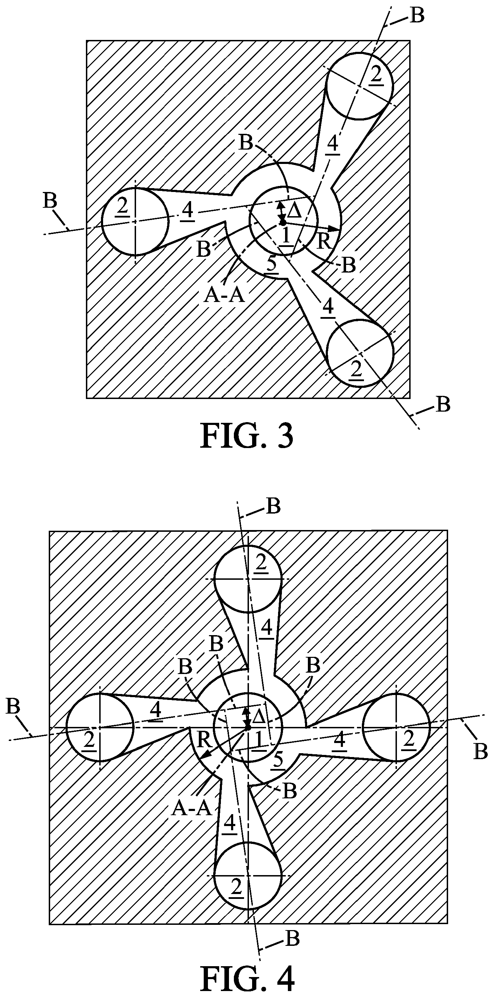

Le principe d'obtention de nouveaux modes de réalisation de l'invention en ajoutant d'autres ensembles d'alimentation latéraux supplémentaires peut être répété. On obtient ainsi des ensembles d'injection 10 à n ensembles d'alimentation latéraux, le nombre entier n étant de préférence compris entre 1 et 6, ou égal à l'une de ces deux limites. Ainsi, [Fig. 1a] et [Fig. 1b] correspondent au cas n égal à 1, [Fig. 2a] et [Fig. 2b] correspondent au cas n égal à 2, [Fig. 3] correspond au cas n égal à 3, et [Fig. 4] correspond au cas n égal à 4. Pour chaque élément d'injection 10, les canaux latéraux respectifs 4 des ensembles d'alimentation latéraux sont de préférence répartis régulièrement autour de l'axe longitudinal A-A de la préchambre 5. Autrement dit, l'angle entre deux canaux latéraux 4 qui sont voisins est de préférence sensiblement égal à 2π/n par rapport à l'axe A-A, quelle que soit la paire de canaux latéraux voisins 4. Les perfectionnements présentés plus haut dans le cas où n est égal à deux se généralisent de la façon suivante :
- l'aire de l'ouverture O5 de la préchambre 5 peut être sensiblement égale à la somme de l'aire de l'ouverture O1 et de celles des n ouvertures O4 des n canaux latéraux 4. Lorsque les n canaux latéraux 4 sont identiques en dehors de leur position angulaire autour de l'axe longitudinal A-A, ce perfectionnement conduit à l'aire de l'ouverture O5 qui est sensiblement égale à la somme de l'aire de l'ouverture O1 et de n fois l'aire de l'ouverture O4 de l'un des canaux latéraux 4 ; et
- les axes longitudinaux respectifs B-B des n canaux latéraux 4 peuvent être déviés selon des rotations respectives autour d'axes parallèles à l'axe longitudinal A-A, avec des angles respectifs qui sont identiques, de sorte que les axes longitudinaux B-B de tous ces canaux latéraux 4 divisent la section de la préchambre 5 en n+1 parties qui sont sensiblement égales. Pour cela, et lorsque la préchambre 5 possède encore une forme de cylindre droit à base circulaire de rayon R, le quotient Δ/R est égal à [π/(n·(n+1)·tan(π/n))]^{1/2} à +/-10% près.

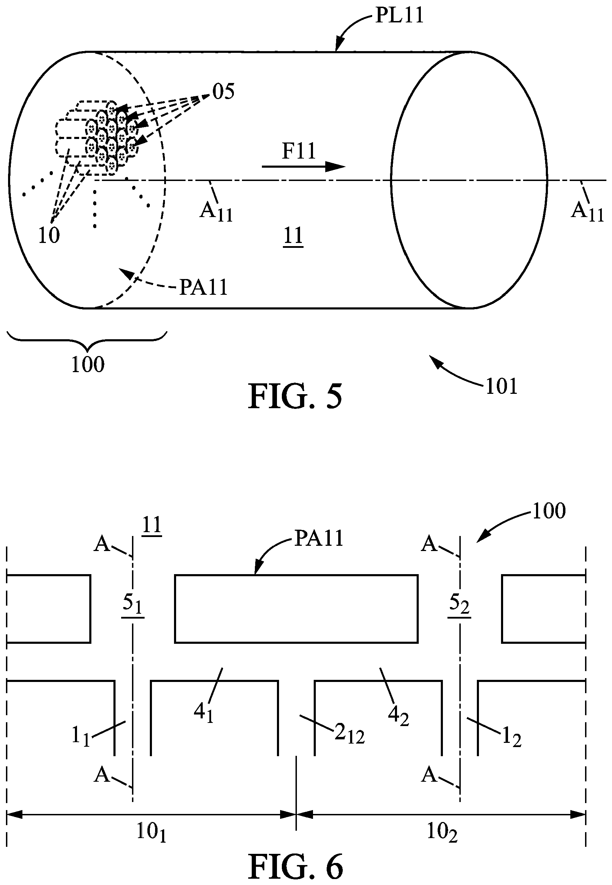

Conformément à [Fig. 5], un moteur à détonation continue 101 comporte une chambre de combustion 11, par exemple de forme cylindrique avec un axe longitudinal A₁₁-A₁₁ et une paroi latérale PL11. Des fluides, qui comprennent des composants de combustion, sont introduits dans la chambre 11 à travers une paroi amont de celle-ci, qui est désignée par la référence PA11. Cette paroi amont PA11 est constituée par l'injecteur du moteur à détonation continue. La référence 100 désigne cet injecteur. Pour cela, l'injecteur 100 peut être muni d'une multitude d'éléments d'injection 10 dont les ouvertures O5 traversent la paroi amont PA11. Ainsi, la paroi amont PA11 est constituée par la face P100 de l'injecteur 100. De cette façon, les fluides nécessaires à la combustion, ainsi que d'autres fluides éventuels tels que des composantes de dilution, peuvent être injectés dans la chambre de combustion 11, à travers sa paroi amont PA11 d'une façon qui est répartie sur toute la surface utile pour l'injection, dans cette paroi amont. Grâce à la structure des éléments d'injection 10, les différentes composantes du mélange de combustion pénètrent dans la chambre 11 sous forme d'écoulements déjà conflués finement, tout en assurant que le mélange de ces composantes les unes avec les autres ne se produise principalement qu'à l'intérieur de la chambre de combustion 11. Ainsi, une couche du mélange combustible se forme dans la chambre 11 à une distance de la paroi amont PA11 qui est non-nulle, contrôlée et régulière, permettant une propagation continue de la détonation. La référence 101 désigne de façon générale le moteur à détonation continue, et F11 désigne la direction générale d'écoulement des fluides à l'intérieur de la chambre de combustion 11. Par souci de clarté de cette figure, [Fig. 5] ne montre pas de corps central qui se prolonge jusqu'à la paroi amont PA11 dans la chambre de combustion 11, bien que l'utilisation d'un tel corps central soit préférable pour un moteur à détonation continue, de même que pour d'autres applications de l'invention. Les éléments d'injection 10 sont alors répartis dans la paroi amont P11 entre ce corps central et la paroi latérale PL11. Toutefois, des chambres de combustion qui sont dépourvues de corps centraux sont appropriées pour des applications particulières, telle qu'un réacteur chimique à écoulement, par exemple. Les éléments d'injection 10 peuvent alors être répartis dans la paroi amont PA11 jusqu'à l'axe A₁₁-A₁₁, ou bien être limités de nouveau en dehors d'une partie centrale de la paroi amont PA11, en fonction de chaque application.

Plusieurs règles peuvent être utilisées alternativement pour attribuer les fluides qui contiennent séparément les composantes du mélange combustible aux conduits axiaux 1 ou latéraux 2, parmi lesquelles :
- celui des fluides qui est à injecter dans la chambre de combustion 11 avec le débit le plus élevé peut être amené dans les préchambres 5 des éléments d'injection 10 par les conduits latéraux 2 et les canaux latéraux associés 4 ; ou
- celui des fluides qui est à injecter dans la chambre de combustion 11 et qui contient un réducteur destiné à participer à la réaction de combustion peut être amené dans les préchambres 5 des éléments d'injection 10 par les conduits axiaux 1, et un autre des fluides qui est à injecter et qui contient un oxydant peut être amené dans les préchambres 5 par les conduits latéraux 2 et les canaux latéraux associés 4.

Les fluides qui sont amenés dans la chambre de combustion 11 par l'injecteur 100 peuvent être liquides ou gazeux, ou constitués par des gouttelettes dispersées dans un gaz vecteur. Notamment, l'un au moins de ces fluides peut être un ergol, de l'hydrogène, de l'oxygène, etc.

[Fig. 6] montre une configuration avantageuse de l'alimentation en fluide des canaux latéraux dans l'injecteur 100. Selon cette configuration, des éléments d'injection qui sont voisins dans la paroi amont PA11 de la chambre de combustion 11 peuvent partager au moins un conduit latéral. Dans cette figure, les références 5₁ et 5₂ désignent les préchambres de deux éléments d'injection voisins 10₁ et 10₂, les références 1₁ et 1₂ désignent leurs conduits axiaux respectifs, et leurs canaux latéraux respectifs 4₁ et 4₂ sont ouverts en amont sur le même conduit latéral 2₁₂. Lorsque chaque élément d'injection de l'injecteur 100 possède trois canaux latéraux et que ces éléments d'injection sont disposés dans la paroi amont PA11 de la chambre de combustion 11 selon un réseau triangulaire, notamment un réseau triangulaire équilatéral, chaque conduit latéral peut être partagé entre trois éléments d'injection voisins. Dans une autre possibilité de disposition des éléments d'injection, ceux-ci peuvent former un réseau hexagonal dans la paroi amont PA11, notamment un réseau hexagonal régulier. Alors, si chaque élément d'injection de l'injecteur 100 possède encore trois canaux latéraux, chaque conduit latéral peut participer à alimenter six éléments d'injection.

Il est entendu que l'invention peut être reproduite en modifiant des aspects secondaires des modes de réalisation qui ont été décrits en détail ci-dessus, tout en conservant certains au moins des avantages cités. Notamment, la disposition des éléments d'injection 10 dans la face P100 de l'injecteur 100 peut être modifiée, ainsi que le nombre de canaux latéraux 4 par élément d'injection 10. En outre, pour chaque élément d'injection 10, les axes longitudinaux respectifs B-B des canaux latéraux 4 ne sont pas nécessairement contenus dans un plan perpendiculaire à l'axe longitudinal A-A de la préchambre 5, et des directions longitudinales respectives du conduit axial 1 et de chaque conduit latéral 2 ne sont pas nécessairement parallèles à l'axe longitudinal A-A de la préchambre 5. Enfin, toutes les valeurs numériques qui ont été citées ne l'ont été qu'à titre d'illustration, et peuvent être changées en fonction de l'application considérée.

## Revendications

1. Injecteur (100) pour réacteur à alimentations séparées en fluides afin de faire réagir ces fluides à partir de conditions de confluence, ledit injecteur étant adapté pour injecter simultanément au moins deux fluides dans une chambre (11) en créant des conditions pour un mélange des fluides dans la chambre, l'injecteur étant adapté pour former une paroi (PA11) de la chambre ou pour être intégré à une paroi de la chambre, l'injecteur comprenant au moins un élément d'injection (10) adapté pour recevoir les fluides séparément par un conduit axial (1) et par au moins un canal latéral (4), lesdits conduit axial et canal latéral étant dédiés audit élément d'injection, et pour transmettre les fluides ainsi conflués vers ou dans la chambre,
chaque élément d'injection (10) comprenant un volume évidé, appelé préchambre (5), qui possède un axe longitudinal (A-A), un côté amont et un côté aval qui sont opposés selon l'axe longitudinal, et définis par rapport à un sens d'écoulement des fluides dans la préchambre parallèlement à l'axe longitudinal, le conduit axial (1) dudit élément d'injection débouchant dans la préchambre sur le côté amont, et chaque canal latéral (4) débouchant dans la préchambre à travers une paroi latérale (PL5) de ladite préchambre qui est située entre les côtés amont et aval, de façon à faire confluer dans la préchambre les fluides amenés séparément par le conduit axial et chaque canal latéral, la préchambre étant en outre en communication fluidique avec la chambre (11) sur le côté aval,
pour chaque élément d'injection (10), une ouverture (O4) de chaque canal latéral (4) dans la paroi latérale (PL5) de la préchambre (5) est allongée parallèlement à l'axe longitudinal (A-A), avec une largeur maximale (H) de l'ouverture, mesurée perpendiculairement audit axe longitudinal, qui est inférieure à une longueur (L₁) de l'ouverture, mesurée parallèlement audit axe longitudinal,
l'élément d'injection (10) comprenant au moins deux canaux latéraux (4) qui débouchent dans la préchambre (5) dudit élément d'injection, avec des ouvertures (O4) respectives dans la paroi latérale (PL5) de la préchambre (5) qui sont séparées, et réparties angulairement autour de l'axe longitudinal (A-A) selon une périodicité azimutale,
et dans lequel un axe longitudinal (B-B) de chaque canal latéral (4) est décalé transversalement d'un écart (Δ) non-nul par rapport à l'axe longitudinal (A-A) de la préchambre (5),
l'injecteur (100) étant **caractérisé en ce que**, lorsque chaque élément d'injection (10) comprend deux canaux latéraux (4) qui débouchent dans la préchambre (5) dudit élément d'injection, à des endroits qui sont opposés par rapport à l'axe longitudinal (A-A) de ladite préchambre, ladite préchambre (5) ayant une forme cylindrique à section circulaire de rayon R, l'écart (Δ) entre l'axe longitudinal (B-B) de chaque canal latéral (4) et l'axe longitudinal (A-A) de la préchambre (5) est compris entre 0,9 et 1,1 fois la valeur du rayon R multipliée par 0,265,
ou lorsque chaque élément d'injection (10) comprend n canaux latéraux (4) qui débouchent dans la préchambre (5) dudit élément d'injection, n étant un nombre entier supérieur ou égal à 3 et inférieur ou égal à 6, ladite préchambre ayant une forme cylindrique à section circulaire de rayon R, l'écart (Δ) entre l'axe longitudinal (B-B) de chaque canal latéral (4) et l'axe longitudinal (A-A) de la préchambre (5) est compris entre 0,9 et 1,1 fois la valeur du rayon R multipliée par [π/(n·(n+1)·tan(π/n))]^{1/2},
injecteur dans lequel en outre pour chaque élément d'injection (10), chaque canal latéral (4) est connecté à un conduit latéral (2) qui est destiné à amener l'un des fluides à mélanger à une entrée dudit canal latéral qui est opposée à la préchambre (5) dudit élément d'injection, et dans lequel pour au moins un couple d'éléments d'injection (10) qui sont voisins dans la paroi (PA11) de la chambre (11), le même conduit latéral (2) est commun aux deux éléments d'injection, en étant connecté en parallèle aux entrées des canaux latéraux (4) respectifs desdits deux éléments d'injection.

2. Injecteur (100) selon la revendication 1, dans lequel pour chaque élément d'injection (10) et pour chaque canal latéral (4) dudit élément d'injection, un quotient de la longueur (L₁) de l'ouverture (O4) sur la largeur maximale (H) de ladite ouverture est supérieur à 1,5, de préférence supérieur à 2 et inférieur à 8.

3. Injecteur (100) selon la revendication 1 ou 2, dans lequel le rayon R de la préchambre (5) est compris entre 0,5 mm et 5 mm, de préférence entre 0,6 mm et 2 mm.

4. Injecteur (100) selon l'une quelconque des revendications précédentes, comprenant plusieurs éléments d'injection (10) qui sont disposés pour injecter simultanément dans la chambre (11) à des endroits respectifs séparés qui sont répartis dans la paroi (PA11) de ladite chambre, les fluides amenés à confluer à l'intérieur des préchambres (5) de tous les éléments d'injection.

5. Injecteur (100) selon la revendication 4, adapté pour que les endroits séparés dans la paroi (PA11) de la chambre (11) auxquels sont injectés les fluides à mélanger, en provenance des préchambres (5), constituent un agencement régulier, de préférence un agencement qui est périodique angulairement autour d'un point central de ladite paroi si ladite paroi possède une forme à symétrie de révolution.

6. Moteur (101), comprenant un injecteur (100) qui est conforme à l'une quelconque des revendications précédentes, ledit injecteur constituant une paroi d'une chambre (11) de combustion du moteur, ou étant intégré dans une paroi d'une chambre de combustion du moteur.

7. Moteur (101) selon la revendication 6, ledit moteur étant d'un type à détonation continue, et pouvant constituer une turbomachine, notamment un turboréacteur, une turbine d'hélicoptère ou une turbine à gaz terrestre, ou ledit moteur étant un micromoteur ou une microturbine.

8. Moteur (101) selon la revendication 6 ou 7 et agencé de sorte que celui des fluides qui contient un réducteur soit injecté par le conduit axial (1) dans chaque préchambre (5), et un autre des fluides, qui contient un oxydant, soit injecté par le canal latéral (4) ou par au moins un des canaux latéraux dans chaque préchambre.

9. Moteur selon la revendication 8, dans lequel le réducteur est de l'hydrogène, et l'oxydant est de l'oxygène.

10. Moteur selon l'une des revendications 6 à 9, agencé de sorte que celui des fluides qui est injecté dans la chambre (11) avec un débit qui est le plus élevé par rapport à chaque autre fluide injecté dans ladite chambre, dans des conditions de fonctionnement de l'injecteur, soit injecté dans chaque préchambre (5) par le canal latéral (4) ou par au moins un des canaux latéraux.

## Patentansprüche

1. Einspritzvorrichtung (100) für einen Reaktor mit getrennten Fluidzufuhren, um diese Fluide aus Konfluenzbedingungen heraus zur Reaktion zu bringen, wobei die Einspritzvorrichtung dazu ausgelegt ist, mindestens zwei Fluide gleichzeitig in eine Kammer (11) einzuspritzen, indem Bedingungen für eine Vermischung der Fluide in der Kammer geschaffen werden, wobei die Einspritzvorrichtung dazu ausgelegt ist, eine Wand (PA11) der Kammer zu bilden oder in eine Wand der Kammer integriert zu werden, wobei die Einspritzvorrichtung mindestens ein Einspritzelement (10) umfasst, das dazu ausgelegt ist, die Fluide durch einen axialen Kanal (1) und durch mindestens einen seitlichen Kanal (4) getrennt aufzunehmen, wobei der axiale Kanal und der seitliche Kanal dem Einspritzelement zugeordnet sind, um die so zugeflossenen Fluide zur oder in die Kammer zu übertragen,
wobei jedes Einspritzelement (10) ein vertieftes Volumen, Vorkammer (5) genannt, umfasst, das eine Längsachse (A-A), eine stromaufwärtige Seite und eine stromabwärtige Seite aufweist, die entlang der Längsachse einander gegenüberliegen und in Bezug auf eine Strömungsrichtung der Fluide in der Vorkammer parallel zur Längsachse definiert sind, wobei der axiale Kanal (1) des Einspritzelements auf der stromaufwärtigen Seite in die Vorkammer mündet und jeder seitliche Kanal (4) durch eine Seitenwand (PL5) der Vorkammer, die sich zwischen der stromaufwärtigen und der stromabwärtigen Seite befindet, in die Vorkammer mündet, so dass die durch den axialen Kanal und jeden seitlichen Kanal getrennt zugeführten Fluide in der Vorkammer zusammenfließen, wobei die Vorkammer ferner auf der stromabwärtigen Seite in fluidischer Verbindung mit der Kammer (11) steht,
wobei für jedes Einspritzelement (10) eine Öffnung (O4) jedes seitlichen Kanals (4) in der Seitenwand (PL5) der Vorkammer (5) parallel zur Längsachse (A-A) verlängert ist, wobei eine maximale Breite (H) der Öffnung, die senkrecht zur Längsachse gemessen wird, geringer ist als eine Länge (L₁) der Öffnung, die parallel zur Längsachse gemessen wird, wobei das Einspritzelement (10) mindestens zwei seitliche Kanäle (4) umfasst, die in die Vorkammer (5) des Einspritzelements münden, mit jeweiligen Öffnungen (O4) in der Seitenwand (PL5) der Vorkammer (5), die voneinander getrennt sind und in einer Azimutperiodizität winkelförmig um die Längsachse (A-A) verteilt sind,
und wobei eine Längsachse (B-B) jedes seitlichen Kanals (4) gegenüber der Längsachse (A-A) der Vorkammer (5) um einen Abstand (Δ) von ungleich Null quer versetzt ist, wobei die Einspritzvorrichtung (100) **dadurch gekennzeichnet ist, dass**, wenn jedes Einspritzelement (10) zwei seitliche Kanäle (4) umfasst, die an Stellen, die gegenüber der Längsachse (A-A) der Vorkammer einander gegenüberliegen, in die Vorkammer (5) des Einspritzelements münden, wobei die Vorkammer (5) eine zylindrische Form mit kreisförmigem Querschnitt mit Radius R aufweist und der Abstand (Δ) zwischen der Längsachse (B-B) jedes seitlichen Kanals (4) und der Längsachse (A-A) der Vorkammer (5) zwischen dem 0,9- und 1,1-fachen des Wertes des Radius R, multipliziert mit 0,265, liegt,
oder wobei n eine ganze Zahl ist, die größer oder gleich 3 und kleiner oder gleich 6 ist, wenn jedes Einspritzelement (10) n seitliche Kanäle (4) umfasst, die in die Vorkammer (5) des Einspritzelements münden, wobei die Vorkammer eine zylindrische Form mit kreisförmigem Querschnitt mit Radius R aufweist und der Abstand (Δ) zwischen der Längsachse (B-B) jedes seitlichen Kanals (4) und der Längsachse (A-A) der Vorkammer (5) zwischen dem 0,9- und 1,1-fachen des Werts des Radius R, multipliziert mit [π/(n·(n+1)·tan(π/n))]^{1/2}, liegt, Einspritzvorrichtung, bei der ferner für jedes Einspritzelement (10) jeder seitliche Kanal (4) mit einem seitlichen Kanal (2) verbunden ist, der dazu bestimmt ist, eines der zu vermischenden Fluide zu einem Eingang des seitlichen Kanals zu führen, der der Vorkammer (5) des Einspritzelements gegenüberliegt, und wobei für mindestens ein Paar Einspritzelemente (10), die in der Wand (PA11) der Kammer (11) benachbart sind, derselbe seitliche Kanal (2) beiden Einspritzelemente gemeinsam ist und er parallel an die Eingänge der jeweiligen seitlichen Kanäle (4) der beiden Einspritzelemente angeschlossen ist.

2. Einspritzvorrichtung (100) nach dem Anspruch 1, wobei für jedes Einspritzelement (10) und für jeden seitlichen Kanal (4) des Einspritzelements der Quotient aus der Länge (L₁) der Öffnung (O4) und der maximalen Breite (H) der Öffnung größer als 1,5, vorzugsweise größer als 2 und kleiner als 8 ist.

3. Einspritzvorrichtung (100) nach Anspruch 1 oder 2, wobei der Radius R der Vorkammer (5) zwischen 0,5 mm und 5 mm, vorzugsweise zwischen 0,6 mm und 2 mm, liegt.

4. Einspritzvorrichtung (100) nach einem der vorhergehenden Ansprüche, umfassend mehrere Einspritzelemente (10), die so angeordnet sind, dass sie gleichzeitig an jeweiligen, voneinander getrennten Stellen, die in der Wand (PA11) der Kammer verteilt sind, in die Kammer (11) einspritzen, wobei die Fluide so zugeführt werden, dass sie im Inneren der Vorkammern (5) aller Einspritzelemente zusammenfließen.

5. Einspritzvorrichtung (100) nach Anspruch 4, die dazu ausgelegt ist, die getrennten Stellen in der Wand (PA11) der Kammer (11), in die die von den Vorkammern (5) kommenden zu mischenden Fluide eingespritzt werden, eine regelmäßige Anordnung bilden, vorzugsweise eine Anordnung, die winkelförmig periodisch um einen Mittelpunkt der Wand verläuft, wenn die Wand eine rotationssymmetrische Form aufweist.

6. Motor (101), umfassend eine Einspritzvorrichtung (100), die einem der vorhergehenden Ansprüche entspricht, wobei die Einspritzvorrichtung eine Wand einer Verbrennungskammer (11) des Motors bildet oder in eine Wand einer Verbrennungskammer des Motors integriert ist.

7. Motor (101) nach Anspruch 6, wobei der Motor vom Typ mit kontinuierlicher Detonation ist und eine Turbomaschine bilden kann, insbesondere einen Strahltriebwerk, eine Hubschrauberturbine oder eine terrestrische Gasturbine, oder wobei der Motor ein Mikromotor oder eine Mikroturbine ist.

8. Motor (101) nach Anspruch 6 oder 7 und so angeordnet, dass dasjenige der Fluide, das ein Reduktionsmittel enthält, durch den axialen Kanal (1) in jede Vorkammer (5) eingespritzt wird, und ein anderes der Fluide, das ein Oxidationsmittel enthält, durch den seitlichen Kanal (4) oder durch mindestens einen der seitlichen Kanäle in jede Vorkammer eingespritzt wird.

9. Motor nach Anspruch 8, wobei das Reduktionsmittel Wasserstoff ist und das Oxidationsmittel Sauerstoff ist.

10. Motor nach einem der Ansprüche 6 bis 9, der so angeordnet ist, dass dasjenige der Fluide, das in die Kammer (11) mit einem Durchfluss eingespritzt wird, der im Vergleich zu jedem anderen Fluid, das in die Kammer eingespritzt wird, unter Betriebsbedingungen der Einspritzvorrichtung am höchsten ist, in jede Vorkammer (5) durch den seitlichen Kanal (4) oder durch mindestens einen der seitlichen Kanäle eingespritzt wird.

## Claims

1. Injector (100) for a reactor with separate fluid supplies in order to react these fluids using merging conditions, said injector being capable of injecting at least two fluids simultaneously into a chamber (11) by creating conditions for mixing the fluids in the chamber, the injector being capable of forming a wall (PA11) of the chamber or to be integrated into a wall of the chamber, the injector comprising at least one injection element (10) capable of receiving the fluids separately via an axial conduit (1) and via at least one lateral channel (4), said axial conduit and lateral channel being dedicated to said injection element, and of transmitting the thus merged fluids towards or into the chamber,
each injection element (10) comprising a hollowed-out volume, called the pre-chamber (5), which has a longitudinal axis (A-A), an upstream side and a downstream side which are opposite along the longitudinal axis, and defined with respect to a direction of flow of the fluids in the pre-chamber parallel to the longitudinal axis, the axial conduit (1) of said injection element opening into the pre-chamber on the upstream side, and each lateral channel (4) opening into the pre-chamber through a lateral wall (PL5) of said pre-chamber which is located between the upstream and downstream sides, so as to merge in the pre-chamber the fluids conveyed separately via the axial conduit and each lateral channel, the pre-chamber further being in fluid communication with the chamber (11) on the downstream side,
for each injection element (10), an opening (O4) of each lateral channel (4) in the lateral wall (PL5) of the pre-chamber (5) extends parallel to the longitudinal axis (A-A), with a maximum width (H) of the opening, measured perpendicularly to said longitudinal axis, which is less than a length (L₁) of the opening, measured parallel to said longitudinal axis,
the injection element (10) comprising at least two lateral channels (4) which open into the pre-chamber (5) of said injection element, with respective openings (O4) in the lateral wall (PL5) of the pre-chamber (5) which are separated, and distributed angularly about the longitudinal axis (A-A) according to an azimuth periodicity,
and wherein a longitudinal axis (B-B) of each lateral channel (4) is offset transversely by a non-zero deviation (Δ) with respect to the longitudinal axis (A-A) of the pre-chamber (5),
the injector (100) being **characterised in that**, when each injection element (10) comprises two lateral channels (4) which open into the pre-chamber (5) of said injection element, at locations which are opposite with respect to the longitudinal axis (A-A) of said pre-chamber, said pre-chamber (5) having a cylindrical shape with a circular cross-section of radius R, the deviation (Δ) between the longitudinal axis (B-B) of each lateral channel (4) and the longitudinal axis (A-A) of the pre-chamber (5) is between 0.9 and 1.1 times the value of the radius R multiplied by 0.265,
or, when each injection element (10) comprises n lateral channels (4) which open into the pre-chamber (5) of said injection element, n being an integer greater than or equal to 3 and less than or equal to 6, said pre-chamber having a cylindrical shape with a circular cross-section of radius R, the deviation (Δ) between the longitudinal axis (B-B) of each lateral channel (4) and the longitudinal axis (A-A) of the pre-chamber (5) is between 0.9 and 1.1 times the value of the radius R multiplied by [π/(n·(n+1)·tan(π/n))]^{1/2},
in which injector furthermore, for each injection element (10), each lateral channel (4) is connected to a lateral conduit (2) which is intended to convey one of the fluids to be mixed to an inlet of said lateral channel which is opposite the pre-chamber (5) of said injection element, and wherein for at least one pair of injection elements (10) which are adjacent in the wall (PA11) of the chamber (11), the same lateral conduit (2) is common to the two injection elements, while being connected in parallel to the respective inlets of the lateral channels (4) of said two injection elements.

2. Injector (100) according to claim 1, wherein, for each injection element (10) and for each lateral channel (4) of said injection element, a quotient of the length (L₁) of the opening (O4) to the maximum width (H) of said opening is greater than 1.5, preferably greater than 2 and less than 8.

3. Injector (100) according to claim 1 or 2, wherein the radius R of the pre-chamber (5) is between 0.5 mm and 5 mm, preferably between 0.6 mm and 2 mm.

4. Injector (100) according to any one of the preceding claims, comprising a plurality of injection elements (10) which are arranged to inject simultaneously into the chamber (11), at respective separate locations which are distributed in the wall (PA11) of said chamber, the fluids conveyed to be merged inside the pre-chambers (5) of all the injection elements.

5. Injector (100) according to claim 4, adapted so that the separate locations in the wall (PA11) of the chamber (11) into which the fluids to be mixed, from the pre-chambers (5), are injected, constitute a regular arrangement, preferably an arrangement which is angularly periodic around a central point of said wall if said wall has a rotationally symmetrical shape.

6. Engine (101) comprising an injector (100) according to any one of the preceding claims, said injector constituting a wall of a combustion chamber (11) of the engine, or being integrated into a wall of a combustion chamber of the engine.

7. Engine (101) according to claim 6, said engine being of a continuous detonation type and being capable of constituting a turbomachine, in particular a turbojet engine, a helicopter turbine or an onshore gas turbine, or said motor being a micromotor or a microturbine.

8. Engine (101) according to claim 6 or 7 and arranged so that the one of the fluids containing a reductant is injected via the axial conduit (1) into each pre-chamber (5), and another of the fluids, which contains an oxidant, is injected via the lateral channel (4) or via at least one of the lateral channels into each pre-chamber.

9. Engine according to claim 8, wherein the reductant is hydrogen and the oxidant is oxygen.

10. Engine according to any one of claims 6 to 9, arranged so that the one of the fluids which is injected into the chamber (11) at a flow rate which is the highest in relation to each other fluid injected into said chamber, under operating conditions of the injector, is injected into each pre-chamber (5) via the lateral channel (4) or via at least one of the lateral channels.
